# EUROPEAN PATENT APPLICATION

(11) **EP 4 708 634 A1**
(43) Date of publication of application: **11.03.2026**
(21) Application number: 25197054.7
(22) Date of filing: 20.08.2025
(51) Int. Cl.: H02K 1/02, H02K 1/276

(54) **MOTOR, POWERTRAIN, AND VEHICLE**

(30) Priority: 09.09.2024 CN 202422205761 U
(71) Applicant: Huawei Digital Power Technologies Co., Ltd., Shenzhen, Guangdong 518043 (CN)
(72) Inventor: Lin, Mengxuan, Shenzhen, 518043 (CN); Wu, Wenwen, Shenzhen, 518043 (CN); Zheng, Hao, Shenzhen, 518043 (CN)
(74) Representative: Gill Jennings & Every LLP

(57) **Abstract**

This application provides a motor, a powertrain, and a vehicle. A motor rotor of the motor includes a plurality of permanent magnets, and the plurality of permanent magnets are arranged at intervals. Each permanent magnet includes a plurality of magnetic steels, and the plurality of magnetic steels are adjacently arranged in a first direction. A coercive force of one of the plurality of magnetic steels is unequal to a coercive force of another magnetic steel, remanence of the one magnetic steel is unequal to remanence of still another of the plurality of magnetic steels, a width of the one magnetic steel in the first direction is unequal to both a width of the another magnetic steel and a width of the still another magnetic steel, and the first direction is perpendicular to an axial direction of the motor. In this application, a magnitude of a coercive force and a magnitude of remanence are distinguished by using widths of the plurality of magnetic steels, to help flexibly adjust a distribution of magnetic performance of a permanent magnet, and further reduce wrong sorting of the plurality of magnetic steels due to mixed materials.

## Description

### TECHNICAL FIELD

This application relates to the field of electric vehicle technologies, and in particular, to a motor, a powertrain, and a vehicle.

### BACKGROUND

In a new energy vehicle, a powertrain is used as a power source of the entire vehicle, and working efficiency of the powertrain is critical to performance of the entire vehicle. A motor is an important component of the powertrain, and is configured to convert electric energy into mechanical energy. A permanent magnet in a motor rotor is one of factors that affect an output torque of the motor. However, currently, magnetic performance of the permanent magnet in the motor rotor still needs to be further improved, affecting operation efficiency and reliability of the motor and the powertrain.

### SUMMARY

Embodiments of this application provide a motor, a powertrain, and a vehicle.

According to a first aspect, an embodiment of this application provides a motor. A motor rotor of the motor includes a plurality of permanent magnets, the plurality of permanent magnets are arranged at intervals, each permanent magnet includes a plurality of magnetic steels, and the plurality of magnetic steels are adjacently arranged in a first direction. A coercive force of one of the plurality of magnetic steels is unequal to a coercive force of another magnetic steel, remanence of the one magnetic steel is unequal to remanence of still another of the plurality of magnetic steels, a width of the one magnetic steel in the first direction is unequal to both a width of the another magnetic steel and a width of the still another magnetic steel, and the first direction is perpendicular to an axial direction of the motor.

In this embodiment of this application, the first direction is parallel to an arrangement direction of the plurality of magnetic steels of each permanent magnet. In an implementation, based on different arrangement manners of the plurality of permanent magnets, first directions corresponding to different permanent magnets may be parallel to each other, or may intersect with each other. In an implementation, a second direction is parallel to a magnetization direction of each permanent magnet. A quantity of magnetic steels of each permanent magnet may be a positive integer greater than or equal to.

In this embodiment of this application, a distribution of a coercive force and remanence in the permanent magnet has important impact on performance of the motor, and needs to be adjusted based on an actual situation. Specifically, application scenarios and arrangement manners of the permanent magnets are different, and correspondingly, easily demagnetized positions of the permanent magnets are also different. The coercive force is used to describe a capability of the permanent magnet to keep an original magnetization direction of the permanent magnet unchanged when the permanent magnet is subject to an external magnetic field. A coercive force of an easily demagnetized part of the permanent magnet needs to be high. In addition, the remanence is used to describe magnetization intensity retained when a magnetized permanent magnet is no longer affected by the external magnetic field, and the distribution of the remanence in the permanent magnet affects a sine degree of a magnetic field of the motor rotor.

If the permanent magnet of the motor rotor is of an integrated structure, and heavy rare earth elements are locally diffused, although the distribution of the coercive force and the remanence can be adjusted, performance consistency of the permanent magnet is adversely affected, a magnetic field of the motor is uneven, and difficulty in process control and performance detection is further increased. In this embodiment of this application, each permanent magnet is divided into the plurality of adjacently arranged magnetic steels, the coercive force of the one magnetic steel is unequal to the coercive force of the another magnetic steel, and the remanence of the one magnetic steel is unequal to the remanence of the still another magnetic steel, so that the coercive force and the remanence in the permanent magnet are freely adjusted, and the permanent magnet can adapt to different application scenarios and arrangement manners. In this embodiment of this application, a local diffusion manner can be avoided, to help improve overall consistency of the permanent magnet and reduce torque fluctuation of the motor. In an embodiment, the plurality of magnetic steels of each permanent magnet are fastened in the first direction, and a fastening manner may be bonding or welding.

In this embodiment of this application, coercive forces or remanence of at least two of the plurality of magnetic steels of each permanent magnet are unequal. Because it is difficult to directly determine a magnitude sequence of coercive forces and remanence of all the magnetic steels, in a process of mounting the permanent magnet, an arrangement error may occur due to mixed materials, and consequently, the coercive force and the remanence of the permanent magnet cannot achieve a preset distribution, and anti-demagnetization performance of the permanent magnet is adversely affected. In this embodiment of this application, a width of each magnetic steel in the permanent magnet is an external property that may be directly observed, and a relationship is established between a coercive force and remanence of the magnetic steel and the width of the magnetic steel, to help avoid a misoperation of mixing materials in the process of mounting the permanent magnet, and ensure that the distribution of the coercive force and the remanence in the permanent magnet can help improve the performance of the motor. In addition, only the width is used to distinguish between the two properties that are the coercive force and the remanence, to help reduce processing difficulty and costs of each magnetic steel in the permanent magnet.

In an embodiment, heights of the plurality of magnetic steels in a second direction are all equal, and the second direction is perpendicular to the axial direction of the motor. Both coercive forces and remanence of two of the plurality of magnetic steels are equal, and widths of the two magnetic steels in the first direction are equal.

In this embodiment of this application, the width of the magnetic steel is adjusted, to facilitate direct distinguishing between a magnitude relationship between coercive forces and remanence of different magnetic steels. The widths of the two magnetic steels are equal only when the two magnetic steels have equal coercive forces and remanence. This helps avoid a disordered arrangement of magnetic steels with different magnetic properties, ensures that the coercive forces and the remanence of the permanent magnets achieve the preset distribution, and reduces processing difficulty and costs of the permanent magnet. The heights of the plurality of magnetic steels are all equal, to help reduce processing difficulty and costs of the magnetic steels, and maintain consistency of the magnetic steels.

In an embodiment, the remanence of the one magnetic steel is equal to remanence of the another magnetic steel, the coercive force of the one magnetic steel is equal to a coercive force of the still another magnetic steel, and the width of the another magnetic steel in the first direction is unequal to the width of the still another magnetic steel.

In this embodiment of this application, in terms of magnetic performance, the one magnetic steel and the another magnetic steel are unequal only in the coercive force, the one magnetic steel and the still another magnetic steel are unequal only in the remanence, and the another magnetic steel and the still another magnetic steel are unequal in both the coercive force and the remanence. Regardless of whether the one magnetic steel, the another magnetic steel, and the still another magnetic steel are unequal only in one magnetic property or in the two magnetic properties, widths of the one magnetic steel, the another magnetic steel, and the still another magnetic steel are unequal. Adjustment and control are performed in consideration of a distribution of both the coercive force and the remanence, so that the coercive force and the remanence of the permanent magnet can be adjusted based on different arrangement manners or application scenarios.

In an embodiment, the coercive force of the one of the plurality of magnetic steels is the smallest, the width of the one magnetic steel in the first direction is greater than the width of the another magnetic steel, and a heavy rare earth element content of the one magnetic steel is less than a heavy rare earth element content of the another magnetic steel.

A difference between the remanence of the still another magnetic steel and the remanence of the one magnetic steel is less than a difference between remanence of the another magnetic steel and the remanence of the one magnetic steel, and a difference between the width of the still another magnetic steel and the width of the one magnetic steel in the first direction is less than a difference between the width of the another magnetic steel and the width of the one magnetic steel.

In this embodiment of this application, a width of a magnetic steel with a smallest coercive force affects costs of the permanent magnet. To improve an anti-demagnetization capability of the permanent magnet, a heavy rare earth element may be added to the permanent magnet, and there is a correspondence of a positive correlation between a heavy rare earth element content and a coercive force of a magnetic steel. However, limited by a price of the heavy rare earth element, a heavy rare earth element content of a rare earth permanent magnet needs to be controlled. In this embodiment of this application, the heavy rare earth element content of the another magnetic steel is higher than the heavy rare earth element content of the one magnetic steel, and the width of the another magnetic steel is lower than the width of the one magnetic steel. The width is adjusted, to not only accurately distinguish the one magnetic steel and the another magnetic steel, but also further help reduce a heavy rare earth element content in the permanent magnet, and reduce costs of the motor.

In this embodiment of this application, widths of magnetic steels with unequal magnetic performance are also unequal. The one magnetic steel, the another magnetic steel, and the still another magnetic steel are used as an example. In a magnetic performance distinguishing process, the coercive forces of the three magnetic steels may be first sorted based on a magnitude relationship between widths, so that the coercive force of the permanent magnet achieves the preset distribution. In this case, relative positions of the three magnetic steels are preliminarily determined. Then, the three magnetic steels are classified into different orders based on a magnitude relationship between the coercive forces. For example, the coercive force of the one magnetic steel is the smallest, and both the coercive force of the another magnetic steel and the coercive force of the still another magnetic steel are greater than the coercive force of the one magnetic steel. Therefore, the another magnetic steel and the still another magnetic steel may be classified into a same order. Then, the another magnetic steel and the still another magnetic steel of the same order are distinguished, and relative magnitudes of the remanence are determined by learning, through comparison, of a difference between the width of the one magnetic steel and each of the width of the another magnetic steel and the width of the still another magnetic steel, to further determine relative positions of the another magnetic steel and the still another magnetic steel of the same order.

In an embodiment, the plurality of magnetic steels of each permanent magnet include one first magnetic steel and one second magnetic steel. The one first magnetic steel and the one second magnetic steel are respectively arranged on two sides of the other of the plurality of magnetic steels in the first direction. Two permanent magnets are adjacently arranged in a circumferential direction of the motor, an included angle between the two permanent magnets faces an outer circumferential surface of the motor rotor, the included angle between the two permanent magnets is less than 180 degrees, and a spacing between two first magnetic steels of the two permanent magnets in the circumferential direction of the motor is less than a spacing between two second magnetic steels of the two permanent magnets.

A coercive force of each first magnetic steel of the two permanent magnets is greater than coercive forces of the other magnetic steels of the two permanent magnets, remanence of each first magnetic steel of the two permanent magnets is greater than remanence of each second magnetic steel of the two permanent magnets, and in each of the two permanent magnets, a difference between a width of the one first magnetic steel and a width of the one second magnetic steel in the first direction is less than or equal to a difference between the width of the one first magnetic steel and a width of any magnetic steel other than the one first magnetic steel and the one second magnetic steel in the plurality of magnetic steels.

In this embodiment of this application, the two permanent magnets are arranged in a V shape, and an included angle between the two permanent magnets has an opening facing the outer circumferential surface of the motor rotor and is less than 180 degrees. A first magnetic steel and a second magnetic steel of each of the two permanent magnets are respectively located at two ends of each permanent magnet. The first magnetic steels of the two permanent magnets in a radial direction of the motor are farther away from the outer circumferential surface of the motor rotor than second magnetic steels of the two permanent magnets, and a spacing between the first magnetic steels of the two permanent magnets in the circumferential direction of the motor is less than a spacing between the second magnetic steels of the two permanent magnets.

In this embodiment of this application, the two permanent magnets are arranged in a V shape, and anti-demagnetization requirements of the first magnetic steels of the two permanent magnets are greater than requirements of the other of the plurality of magnetic steels. Therefore, in this embodiment of this application, coercive forces of the first magnetic steels of the two permanent magnets are adjusted to be greater than coercive forces of the other magnetic steels, so that an anti-demagnetization capability of an end of the two permanent magnets can be improved. The remanence of each first magnetic steel of the two permanent magnets is greater than the remanence of each second magnetic steel of the two permanent magnets. Distributions of remanence of the two permanent magnets are adjusted, so that sine of a magnetic field of a rotor can be optimized.

One of the two permanent magnets is used as an example. Based on particular positions of the first magnetic steel and the second magnetic steel, when the first magnetic steel and the second magnetic steel are classified into different orders, accurate positioning of the first magnetic steel and the second magnetic steel can be directly implemented based on the orders. When the first magnetic steel and the second magnetic steel are classified into a same order, a difference between widths of the first magnetic steel and the second magnetic steel and widths of the other magnetic steels in the plurality of magnetic steels may be learned of through comparison, and the first magnetic steel and the second magnetic steel are distinguished based on a magnitude relationship between remanence.

In an embodiment, in at least one of the two permanent magnets, a coercive force of the one second magnetic steel is greater than a coercive force of a magnetic steel other than the one first magnetic steel and the one second magnetic steel in the plurality of magnetic steels, and a difference between a width of the one first magnetic steel and a width of the one second magnetic steel in the first direction is less than a difference between the width of the one first magnetic steel and a width of any magnetic steel other than the one first magnetic steel and the one second magnetic steel in the plurality of magnetic steels.

In this embodiment of this application, one of the two permanent magnets is used as an example. A second magnetic steel also has a high anti-demagnetization requirement, and a coercive force of the second magnetic steel is between a coercive force of a first magnetic steel and coercive forces of the other magnetic steels. This helps reduce a demagnetization risk at two ends of one of the two permanent magnets. The first magnetic steel and the second magnetic steel are classified into a same order, and the width of the second magnetic steel is closer to the width of the first magnetic steel than the width of the magnetic steel other than the first magnetic steel and the second magnetic steel in the plurality of magnetic steels. Because the width of the first magnetic steel is small, in this embodiment of this application, this helps reduce a quantity of heavy rare earth elements of the permanent magnet, and control costs of the motor rotor.

In an embodiment, in the at least one permanent magnet, remanence of the plurality of magnetic steels decreases in sequence from the one first magnetic steel to the one second magnetic steel in the first direction, and widths of magnetic steels other than the one first magnetic steel and the one second magnetic steel in the plurality of magnetic steels in the first direction are unequal.

In this embodiment of this application, one of the two permanent magnets is used as an example, and the remanence decreases in sequence from the first magnetic steel to the second magnetic steel. This helps improve a sine degree of an air gap magnetic density waveform. On the basis that positions of the first magnetic steel and the second magnetic steel are determined, the plurality of magnetic steels may be mounted based on different widths of the other magnetic steels, to implement a distribution in which the remanence decreases in sequence.

In an embodiment, coercive forces and remanence of the two permanent magnets are axisymmetrically distributed with respect to a radial direction of the motor rotor.

In this embodiment of this application, the coercive forces of the two permanent magnets are symmetrically distributed. Because the coercive forces of the first magnetic steels of the two permanent magnets are large, to help improve an anti-demagnetization capability of the two permanent magnets in an easily demagnetized region. The remanence of the two permanent magnets is symmetrically distributed. Because the remanence of the two permanent magnets decreases in sequence, overall remanence of the two permanent magnets presents a sine wave shape, and a rotor magnetic field closer to a sine distribution can be generated.

In this embodiment of this application, magnetic performance of the two permanent magnets is symmetrically distributed. With reference to a correspondence between a coercive force, remanence, and a width in this embodiment of this application, it can be learned that sizes of the two permanent magnets are also symmetrically distributed, so that magnetic steels of different sizes in the two permanent magnets are evenly distributed, to help reduce processing costs of the permanent magnets and reduce torque fluctuation of the motor.

In an embodiment, an average spacing between the outer circumferential surface of the motor rotor and other two permanent magnets in the radial direction of the motor is greater than an average spacing between the outer circumferential surface of the motor rotor and the two permanent magnets, widths of the other two permanent magnets are greater than widths of the two permanent magnets in the first direction, an included angle between the other two permanent magnets faces the outer circumferential surface of the motor rotor, and the included angle between the other two permanent magnets is less than the included angle between the two permanent magnets.

A coercive force of each first magnetic steel of the other two permanent magnets is less than or equal to the coercive force of each first magnetic steel of the two permanent magnets, the coercive force of each first magnetic steel of the other two permanent magnets is greater than coercive forces of the other magnetic steels of the other two permanent magnets, and a width of each first magnetic steel of the other two permanent magnets in the first direction is less than a width of each second magnetic steel of the other two permanent magnets.

In this embodiment of this application, the other two permanent magnets are arranged in a V shape, and an included angle between the two permanent magnets has an opening facing the outer circumferential surface of the motor rotor and is less than an included angle between the two permanent magnets. The two permanent magnets and the other two permanent magnets are jointly arranged in a double V shape.

In this embodiment of this application, similar to the two permanent magnets, anti-demagnetization requirements of first magnetic steels of the other two permanent magnets are greater than requirements of the other magnetic steels of the other two permanent magnets. In this embodiment of this application, coercive forces of the first magnetic steels of the other two permanent magnets are adjusted to be greater than coercive forces of the other magnetic steels of the other two permanent magnets. This helps reduce a demagnetization risk of the first magnetic steels of the other two permanent magnets.

One of the other two permanent magnets is used as an example. Based on particular positions of the first magnetic steel and the second magnetic steel, when the first magnetic steel and the second magnetic steel are classified into different orders, accurate positioning of the first magnetic steel and the second magnetic steel can be directly implemented based on the orders. When the first magnetic steel and the second magnetic steel are classified into a same order, a difference between widths of the first magnetic steel and the second magnetic steel and widths of the other magnetic steels in the plurality of magnetic steels may be learned of through comparison, and the first magnetic steel and the second magnetic steel are distinguished based on a magnitude relationship between remanence.

In this embodiment of this application, compared with the two permanent magnets, the other two permanent magnets are farther away from an air gap between a motor stator and the motor rotor in the radial direction of the motor, and the other two permanent magnets are unlikely to be affected by an air gap magnetic field. Therefore, in this embodiment of this application, the coercive forces of the first magnetic steels of the other two permanent magnets are adjusted to be less than or equal to the coercive forces of the first magnetic steels of the two permanent magnets, so that quantities of heavy rare earth elements in the first magnetic steels of the other two permanent magnets can be reduced, and costs of the motor can be reduced.

In an embodiment, in the first direction, a ratio of a width of the one first magnetic steel of each of the other two permanent magnets to a sum of widths of the plurality of magnetic steels is less than a ratio of the width of the one first magnetic steel of each of the two permanent magnets to the sum of the widths of the plurality of magnetic steels.

In this embodiment of this application, because the demagnetization risk of the first magnetic steels of the other two permanent magnets is less than the demagnetization risk of the first magnetic steels of the two permanent magnets, and a width ratio of the first magnetic steels of the other two permanent magnets to the other two permanent magnets is less than a width ratio of the first magnetic steels of the two permanent magnets to the two permanent magnets, this can ensure that the first magnetic steels of the two permanent magnets have a strong anti-demagnetization capability, and can also control heavy rare earth element content of each permanent magnet in the motor rotor, to balance performance and costs of the motor.

In an embodiment, coercive forces and remanence of the other two permanent magnets are axisymmetrically distributed with respect to a radial direction of the motor rotor.

In this embodiment of this application, magnetic performance of the other two permanent magnets is symmetrically distributed. With reference to a correspondence between a coercive force, remanence, and a width in this embodiment of this application, it can be learned that sizes of the other two permanent magnets are also symmetrically distributed, so that magnetic steels of different sizes in the other two permanent magnets are evenly distributed, to help reduce processing costs of the permanent magnets and reduce torque fluctuation of the motor.

In an embodiment, still another permanent magnet in the circumferential direction of the motor is arranged between the two permanent magnets, and an average spacing between the still another permanent magnet and the motor rotor in the radial direction of the motor is less than the average spacing between the outer circumferential surface of the motor rotor and the two permanent magnets.

Both remanence of the one first magnetic steel and remanence of the one second magnetic steel of the still another permanent magnet are less than remanence of a magnetic steel other than the one first magnetic steel and the one second magnetic steel in the plurality of magnetic steels, and a coercive force of the one first magnetic steel of the still another permanent magnet is greater than a coercive force of the magnetic steel other than the one first magnetic steel and the one second magnetic steel in the plurality of magnetic steels.

A width of the one first magnetic steel of the still another permanent magnet in the first direction is less than a width of the magnetic steel other than the one first magnetic steel and the one second magnetic steel in the plurality of magnetic steels.

In this embodiment of this application, in the still another permanent magnet in a straight-line shape, the first magnetic steel of the still another permanent magnet is an easily demagnetized part. Therefore, a coercive force of the first magnetic steel of the still another permanent magnet is greater than the coercive forces of the other magnetic steels, to help improve anti-demagnetization performance of the permanent magnet. Different from a case in which the remanence of the plurality of permanent magnets arranged in the V shape form a sine distribution through cooperation, an ideal distribution of the remanence of the permanent magnets arranged in the straight-line shape is that the remanence forms a sine distribution, a magnetic steel with largest remanence in the still another permanent magnet is located between the first magnetic steel and the second magnetic steel. A width of the magnetic steel with the largest remanence in the still another permanent magnet is greater than the width of the first magnetic steel, so that both quick identification of magnetic steels with different performance and control of the heavy rare earth element content are considered.

In an embodiment, in the first direction, a ratio of the width of the one first magnetic steel of the still another permanent magnet to the sum of the widths of the plurality of magnetic steels is greater than the ratio of the width of the one first magnetic steel of each of the other two permanent magnets to the sum of widths of the plurality of magnetic steels.

In this embodiment of this application, the still another permanent magnet and the other two permanent magnets are used as an example. Because a demagnetization risk of the first magnetic steel of the still another permanent magnet is greater than the demagnetization risk of the first magnetic steels of the other two permanent magnets, and a width ratio of the first magnetic steels of the still another permanent magnet to the permanent magnet is greater than a width ratio of the first magnetic steels of the other two permanent magnets to the other two permanent magnets, this can ensure that the first magnetic steel of the still another permanent magnet has a strong anti-demagnetization capability, and can also control heavy rare earth element content of each permanent magnet in the motor rotor, to balance performance and costs of the motor.

According to a second aspect, an embodiment of this application provides a powertrain. The powertrain includes a motor controller, a reducer, and the motor according to any embodiment of the first aspect, the motor controller is configured to provide electric energy for the motor, and the motor is configured to be in transmission connection to the reducer.

In this embodiment of this application, the motor according to the first aspect is used in the powertrain. Because a permanent magnet of a motor rotor has good magnetic performance, magnetic steels in the permanent magnet are not prone to mixed materials, so that performance of the motor is enhanced, to help improve working efficiency and reliability of the powertrain.

According to a third aspect, an embodiment of this application provides a vehicle. The vehicle includes a frame, a battery pack, and the powertrain according to the second aspect, the frame is configured to fasten the battery pack and the powertrain, the battery pack is configured to supply power to a motor by using a motor controller, and the powertrain is configured to drive wheels of the vehicle by using the motor.

In embodiments of this application, the powertrain according to the second aspect is used in the vehicle, to help ensure smooth and safe driving of the vehicle.

### BRIEF DESCRIPTION OF DRAWINGS

To describe technical solutions in embodiments of this application more clearly, the following describes the accompanying drawings used in embodiments of this application.
FIG. 1 is a diagram of a vehicle according to an embodiment of this application;
FIG. 2 is a diagram of a powertrain according to an embodiment of this application;
FIG. 3 is a diagram of a structure of a motor according to an embodiment of this application;
FIG. 4 is a diagram of a motor according to an embodiment of this application;
FIG. 5 is a diagram of a structure of a permanent magnet and a diagram of a distribution of a coercive force according to an embodiment of this application;
FIG. 6 is a diagram of a structure of a permanent magnet and a diagram of a distribution of remanence according to an embodiment of this application;
FIG. 7 is a diagram of another structure of a permanent magnet according to an embodiment of this application;
FIG. 8 is another diagram of a motor according to an embodiment of this application;
FIG. 9 is a diagram of a permanent magnet and a diagram of a distribution of a coercive force according to an embodiment of this application;
FIG. 10 is a diagram of a permanent magnet and a diagram of a distribution of remanence according to an embodiment of this application;
FIG. 11 is a diagram of a plurality of distributions of a coercive force of one of two permanent magnets distributed in a V shape according to an embodiment of this application;
FIG. 12 is a diagram of a plurality of distributions of remanence of one of two permanent magnets distributed in a V shape according to an embodiment of this application; and
FIG. 13 is still another diagram of a motor according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

For ease of understanding, the following explains and describes related technical terms used in embodiments of this application.

A coercive force is external magnetic field strength that needs to be added to enable magnetic induction strength of a magnetized magnetic material to return to zero and that is opposite to an original magnetization direction.

Remanence is magnetization intensity that can be maintained in an original external magnetic field direction after an external magnetic field is removed after a magnetic material is magnetized to saturation.

Verticality: Verticality defined in embodiments of this application is not limited to an absolute vertical intersection relationship. A case in which there is no absolute perpendicular intersection due to a factor such as an assembling tolerance, a design tolerance, or impact of structural flatness is allowed. An error within a small angle range is allowed. For example, an assembling error range of 80 degrees to 100 degrees may be understood as a vertical relationship.

Parallelism: Parallelism defined in embodiments of this application is not limited to absolute parallelism. The definition of the parallelism may be understood as basic parallelism. A case in which there is no absolute parallelism due to a factor such as an assembling tolerance, a design tolerance, or impact of structural flatness is allowed.

Currently, performance of a permanent magnet in a motor rotor needs to be further improved. An embodiment of this application provides a motor. A motor rotor of the motor includes a plurality of permanent magnets, the plurality of permanent magnets are arranged at intervals, and the permanent magnet is configured to generate a magnetic field of the motor rotor. Each permanent magnet includes a plurality of magnetic steels, and the plurality of magnetic steels are adjacently arranged in a first direction. Each permanent magnet is divided into a plurality of segments of magnetic steel, so that a distribution of a coercive force and remanence of each permanent magnet can be adjusted based on an actual requirement. A coercive force of one of the plurality of magnetic steels is unequal to a coercive force of another magnetic steel, remanence of the one magnetic steel is unequal to remanence of still another of the plurality of magnetic steels, a width of the one magnetic steel in the first direction is unequal to both a width of the another magnetic steel and a width of the still another magnetic steel, and the first direction is perpendicular to an axial direction of the motor.

In embodiments of this application, a magnitude of a coercive force and a magnitude of remanence are distinguished by using widths of the plurality of magnetic steels, to help flexibly adjust a distribution of magnetic performance of a permanent magnet, and further reduce wrong sorting of the plurality of magnetic steels due to mixed materials. The motor provided in embodiments of this application may be used in a powertrain, and the powertrain including the motor in this application may be used in a vehicle.

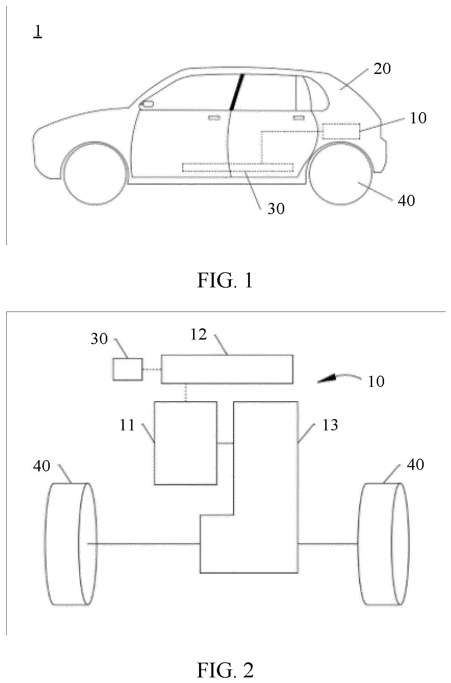

FIG. 1 is a diagram of a vehicle 1 according to an embodiment of this application. In this embodiment of this application, the vehicle 1 is a wheeled device driven or pulled by a power apparatus. In this embodiment of this application, the vehicle 1 includes a frame 20, a battery pack 30, and a powertrain 10. The frame 20 is a structural framework of the vehicle 1. The frame 20 is configured to mount the battery pack 30 and the powertrain 10, and can bear internal and external environmental load of the vehicle 1. The battery pack 30 is configured to supply power to the powertrain 10, and the battery pack 30 may also be referred to as a power battery. The powertrain 10 is a power source of the vehicle 1, and the powertrain 10 is configured to drive a wheel 40 of the vehicle 1.

FIG. 2 is a diagram of a powertrain 10 according to an embodiment of this application. In this embodiment of this application, the powertrain 10 includes a motor 11, a motor controller 12, and a reducer 13. The motor controller 12 is configured to: convert a direct current provided by the battery pack 30 into an alternating current, and transmit the alternating current to the motor 11. The motor 11 is in transmission connection to the reducer 13, to drive the wheel 40 to rotate.

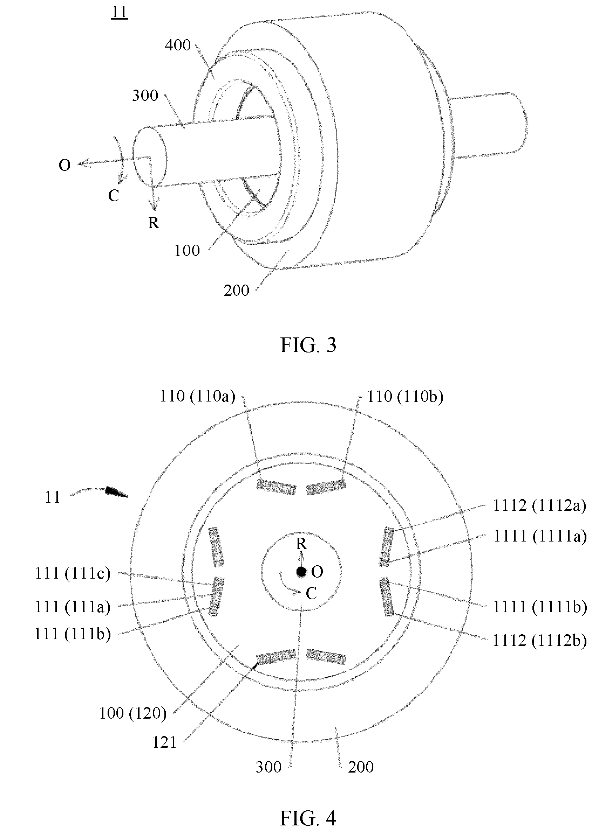

FIG. 3 is a diagram of a structure of a motor 11 according to an embodiment of this application. The motor 11 is an electromagnetic apparatus that implements electric energy conversion or transfer based on a law of electromagnetic induction, and can generate a driving torque. Specifically, in an embodiment, the motor 11 includes a motor rotor 100, a motor stator 200, a motor shaft 300, and a winding 400. After an alternating current transmitted by a motor controller is introduced into a plurality of conducting wires of the winding 400, an alternating flux is generated. The alternating flux generated by the winding 400 interacts with a permanent magnet flux generated by a permanent magnet 110 in the motor rotor 100, so that the motor rotor 100 rotates relative to the motor stator 200. The motor rotor 100 is fastened to the motor shaft 300, so that the motor shaft 300 rotates with the motor rotor 100. The motor stator 200 is rotatably connected to the motor shaft 300, so that the motor shaft 300 can rotate relative to the motor stator 200. Electric energy is converted into mechanical energy. An output end of the motor shaft 300 is configured to transmit the mechanical energy.

In a working process of the motor, an eddy current is generated when the permanent magnet is in a changing magnetic field. An eddy current loss of the permanent magnet increases a heat amount, and a temperature rise increases a demagnetization risk of the permanent magnet. In addition, electromagnetic interference and mechanical vibration may also cause irreversible demagnetization of the permanent magnet. If anti-demagnetization performance of the permanent magnet is poor, working efficiency of the motor and the powertrain is easily reduced, and further, performance of the vehicle is adversely affected.

In this embodiment of this application, a structure of the permanent magnet 110 in the motor rotor 100 is improved, so that a performance distribution of a plurality of magnetic steels 111 in the permanent magnet 110 can be adjusted based on different application scenarios, to help reduce the demagnetization risk of the permanent magnet 110.

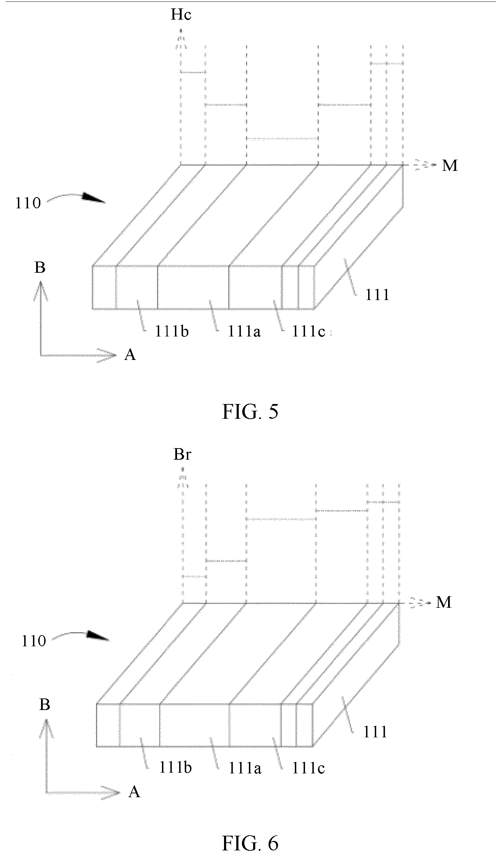

FIG. 4 is a diagram of a motor 11 according to an embodiment of this application. FIG. 5 is a diagram of a structure of a permanent magnet 110 and a diagram of a distribution of a coercive force according to an embodiment of this application. FIG. 6 is a diagram of a structure of a permanent magnet 110 and a diagram of a distribution of remanence according to an embodiment of this application. To facilitate display of a structure of a motor rotor 100, a winding is omitted in FIG. 4.

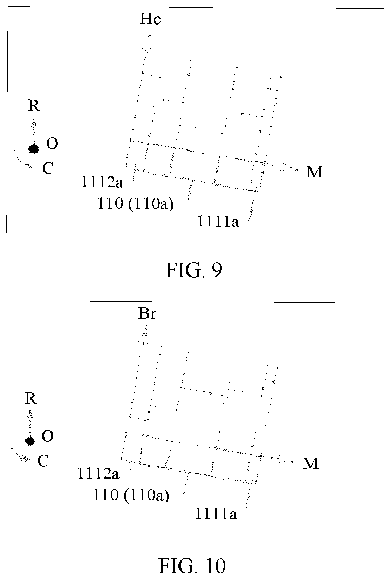

In FIG. 5 and FIG. 6, "Hc" and "Br" respectively represent a coercive force and remanence, and "M" represents magnetic steels at different positions in the permanent magnet, both a distribution of a coercive force and a distribution of remanence that correspond to each magnetic steel are straight lines parallel to a first direction, and it indicates that magnetic performance of each magnetic steel in the permanent magnet are consistent. The foregoing descriptions of FIG. 5 and FIG. 6 in this application are also applied to FIG. 9 to FIG. 12 in this application.

In an embodiment, as shown in FIG. 4, the motor rotor 100 of the motor 11 includes a plurality of permanent magnets 110, and the plurality of permanent magnets 110 are arranged at intervals. As shown in FIG. 4 to FIG. 6, each permanent magnet 110 includes a plurality of magnetic steels 111, and the plurality of magnetic steels 111 are adjacently arranged in a first direction A. With reference to FIG. 5 and FIG. 6, a coercive force of one of the plurality of magnetic steels 111 is unequal to a coercive force of another magnetic steel 111, and remanence of the one magnetic steel 111 is unequal to remanence of still another magnetic steel 111 in the plurality of magnetic steels 111. As shown in FIG. 5 and FIG. 6, a width of the one magnetic steel 111 in the first direction A is unequal to both a width of the another magnetic steel 111 and a width of the still another magnetic steel 111. The first direction A is perpendicular to an axial direction O of the motor 11. For ease of description, the one magnetic steel 111 is denoted as a magnetic steel 111a, the another magnetic steel 111 is denoted as a magnetic steel 111b, and the still another magnetic steel 111 is denoted as a magnetic steel 111c.

In this embodiment of this application, the first direction A is parallel to an arrangement direction of the plurality of magnetic steels 111 of each permanent magnet 110. In an implementation, based on different arrangement manners of the plurality of permanent magnets 110, first directions A corresponding to different permanent magnets 110 may be parallel to each other, or may intersect with each other. In an implementation, a second direction B is parallel to a magnetization direction of each permanent magnet 110. A quantity of magnetic steels 111 of each permanent magnet 110 may be a positive integer greater than or equal to 2.

In this embodiment of this application, a distribution of a coercive force and remanence in the permanent magnet 110 has important impact on performance of the motor, and needs to be adjusted based on an actual situation. Specifically, application scenarios and arrangement manners of the permanent magnets 110 are different, and correspondingly, easily demagnetized positions of the permanent magnets 110 are also different. The coercive force is used to describe a capability of the permanent magnet 110 to keep an original magnetization direction of the permanent magnet 110 unchanged when the permanent magnet 110 is subject to an external magnetic field. A coercive force of an easily demagnetized part of the permanent magnet 110 needs to be high. In addition, the remanence is used to describe magnetization intensity retained when the magnetized permanent magnet 110 is no longer affected by the external magnetic field, and the distribution of the remanence in the permanent magnet 110 affects a sine degree of a magnetic field of the motor rotor 100.

If the permanent magnet 110 of the motor rotor 100 is of an integrated structure, and heavy rare earth elements are locally diffused, although the distribution of the coercive force and the remanence can be adjusted, performance consistency of the permanent magnet 110 is adversely affected, a magnetic field of the motor 11 is uneven, and difficulty in process control and performance detection is further increased. In this embodiment of this application, each permanent magnet 110 is divided into the plurality of adjacently arranged magnetic steels 111, the coercive force of the magnetic steel 111a is unequal to the coercive force of the magnetic steel 111b, and the remanence of the magnetic steel 111a is unequal to the remanence of the magnetic steel 111c, so that the coercive force and the remanence in the permanent magnet 110 are freely adjusted, and the permanent magnet 110 can adapt to different application scenarios and arrangement manners. In this embodiment of this application, a local diffusion manner can be avoided, to help improve overall consistency of the permanent magnet 110 and reduce torque fluctuation of the motor 11. In an embodiment, the plurality of magnetic steels 111 of each permanent magnet 110 are fastened in the first direction A, and a fastening manner may be bonding or welding.

In this embodiment of this application, coercive forces or remanence of at least two of the plurality of magnetic steels 111 of each permanent magnet 110 are unequal. Because it is difficult to directly determine a magnitude sequence of coercive forces and remanence of all the magnetic steels 111, in a process of mounting the permanent magnet 110, an arrangement error may occur due to mixed materials, and consequently, the coercive force and the remanence of the permanent magnet 110 cannot achieve a preset distribution, and anti-demagnetization performance of the permanent magnet 110 is adversely affected. In this embodiment of this application, a width of each magnetic steel 111 in the permanent magnet 110 is an external property that may be directly observed, and a relationship is established between a coercive force and remanence of the magnetic steel 111 and the width of the magnetic steel 111, to help avoid a misoperation of mixing materials in the process of mounting the permanent magnet 110, and ensure that the distribution of the coercive force and the remanence in the permanent magnet 110 can help improve the performance of the motor. In addition, only the width is used to distinguish between the two properties that are the coercive force and the remanence, to help reduce processing difficulty and costs of each magnetic steel 111 in the permanent magnet 110.

It should be noted that, in this embodiment of this application, the quantity of magnetic steels 111 of each permanent magnet 110 is not limited to a quantity presented in the accompanying drawings in this embodiment of this application. In an embodiment, the quantity of magnetic steels 111 of each permanent magnet 110 is a positive integer greater than or equal to 3.

Still as shown in FIG. 4, in an embodiment, the motor rotor 100 further includes a rotor iron core 120, the rotor iron core 120 has a plurality of magnetic steel slots 121, and the plurality of magnetic steel slots 121 penetrate through the rotor iron core 120 along the axial direction O of the motor 11. Each magnetic steel slot 121 is configured to accommodate one permanent magnet 110, and a width of the permanent magnet 110 in each magnetic steel slot 121 in the first direction A is less than or equal to a width of each magnetic steel slot 121.

Still as shown in FIG. 5 and FIG. 6, in an embodiment, heights of the plurality of magnetic steels 111 in the second direction B are all equal, and the second direction B is perpendicular to the axial direction O of the motor 11. Both coercive forces and remanence of two of the plurality of magnetic steels 111 are equal, and widths of the two magnetic steels 111 in the first direction A are equal.

In this embodiment of this application, the width of the magnetic steel 111 is adjusted, to facilitate direct distinguishing between a magnitude relationship between coercive forces and remanence of different magnetic steels 111. The widths of the two magnetic steels 111 are equal only when the two magnetic steels 111 have equal coercive forces and remanence. This helps avoid a disordered arrangement of magnetic steels 111 with different magnetic properties, ensures that the coercive forces and the remanence of the permanent magnets 110 achieve the preset distribution, and reduces processing difficulty and costs of the permanent magnet 110. The heights of the plurality of magnetic steels 111 are all equal, to help reduce processing difficulty and costs of the magnetic steels 111, maintain consistency of the magnetic steels 111, and avoid reducing a slot fill rate of the magnetic steel slot in which the magnetic steels 111 are located.

In an embodiment, the remanence of the magnetic steel 111a is equal to remanence of the magnetic steel 111b, the coercive force of the magnetic steel 111a is equal to a coercive force of the magnetic steel 111c, and the width of the magnetic steel 111b in the first direction A is unequal to the width of the magnetic steel 111c.

In this embodiment of this application, in terms of magnetic performance, the magnetic steel 111a and the magnetic steel 111b are unequal only in the coercive force, the magnetic steel 111a and the magnetic steel 111c are unequal only in the remanence, and the magnetic steel 111b and the magnetic steel 111c are unequal in both the coercive force and the remanence. Regardless of whether the magnetic steel 111a, the magnetic steel 111b, and the magnetic steel 111c are unequal only in one magnetic property or in the two magnetic properties, widths of the magnetic steel 111a, the magnetic steel 111b, and the magnetic steel 111c are unequal. Adjustment and control are performed in consideration of a distribution of both the coercive force and the remanence, so that the coercive force and the remanence of the permanent magnet 110 can be adjusted based on different arrangement manners or application scenarios.

Still as shown in FIG. 5 and FIG. 6, in an embodiment, the coercive force of the magnetic steel 111a in the plurality of magnetic steels 111 is the smallest, the width of the one magnetic steel 111a in the first direction A is greater than the width of the magnetic steel 111b, and a heavy rare earth element content of the magnetic steel 111a is less than a heavy rare earth element content of the magnetic steel 111b.

A difference between the remanence of the magnetic steel 111c and the remanence of the magnetic steel 111a is less than a difference between remanence of the magnetic steel 111b and the remanence of the magnetic steel 111a, and a difference between the width of the magnetic steel 111c and the width of the magnetic steel 111a in the first direction A is less than a difference between the width of the magnetic steel 111b and the width of the magnetic steel 111a.

In this embodiment of this application, a width of a magnetic steel 111 with a smallest coercive force affects costs of the permanent magnet 110. The permanent magnet 110 of the motor rotor 100 is usually manufactured by using a rare earth element. For example, the permanent magnet 110 in this embodiment of this application is a neodymium iron boron permanent magnet. Magnetic performance of a rare earth permanent magnet is better than magnetic performance of a ferrite permanent magnet, but the rare earth permanent magnet still has a demagnetization risk. To improve an anti-demagnetization capability of the rare earth permanent magnet, a heavy rare earth element may be added to the permanent magnet 110, and there is a correspondence of a positive correlation between a heavy rare earth element content and a coercive force of a magnetic steel 111. However, limited by a price of the heavy rare earth element, a heavy rare earth element content of a rare earth permanent magnet needs to be controlled. In this embodiment of this application, the heavy rare earth element content of the magnetic steel 111b is higher than the heavy rare earth element content of the magnetic steel 111a, and the width of the magnetic steel 111b is lower than the width of the magnetic steel 111a. The width is adjusted, to not only accurately distinguish the magnetic steel 111a and the magnetic steel 111b, but also further help reduce a heavy rare earth element content in the permanent magnet 110, and reduce costs of the motor 11.

In this embodiment of this application, widths of magnetic steels 111 with unequal magnetic performance are also unequal. The magnetic steel 111a, the magnetic steel 111b, and the magnetic steel 111c are used as an example. In a magnetic performance distinguishing process, the coercive forces of the three magnetic steels 111 may be first sorted based on a magnitude relationship between widths, so that the coercive force of the permanent magnet 110 achieves the preset distribution. In this case, relative positions of the three magnetic steels 111 are preliminarily determined. Then, the three magnetic steels 111 are classified into different orders based on a magnitude relationship between the coercive forces. For example, the coercive force of the magnetic steel 111a is the smallest, and both the coercive force of the magnetic steel 111b and the coercive force of the magnetic steel 111c are greater than the coercive force of the magnetic steel 111a. Therefore, the magnetic steel 111b and the magnetic steel 111c may be classified into a same order. Then, the magnetic steel 111b and the magnetic steel 111c of the same order are distinguished, and relative magnitudes of the remanence are determined by learning, through comparison, of a difference between the width of the magnetic steel 111a and each of the width of the magnetic steel 111b and the width of the magnetic steel 111c, to further determine relative positions of the magnetic steel 111b and the magnetic steel 111c of the same order. In an embodiment, a quantity of magnetic steels 111 of each order is less than or equal to 3, to improve accuracy of determining a magnitude relationship between remanence.

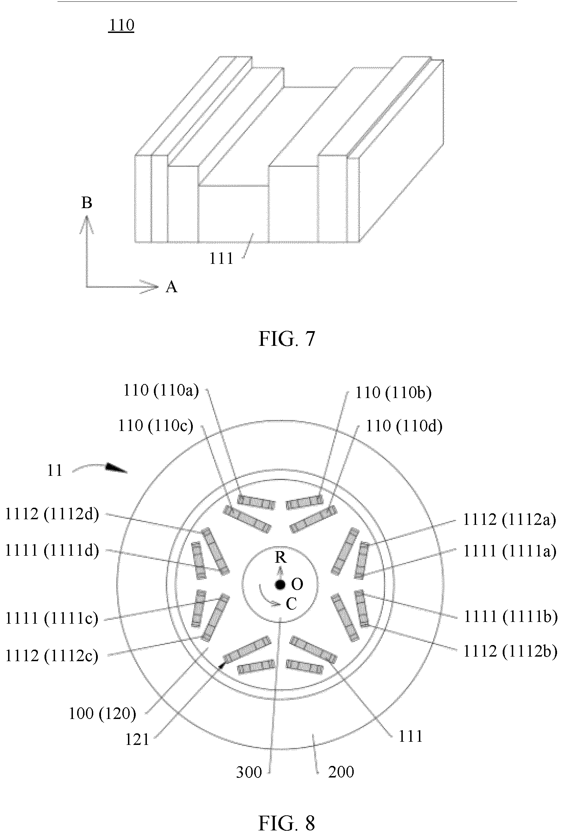

FIG. 7 is a diagram of another structure a permanent magnet 110 according to an embodiment of this application. In an embodiment, when a quantity of magnetic steels 111 of one permanent magnet 110 is large, and a distribution of the coercive force and a distribution of the remanence are complex, it may be considered to additionally change heights of the magnetic steels 111. To be specific, coercive forces are sorted based on a magnitude relationship between widths of the magnetic steels 111, and remanence is sorted based on a magnitude relationship between the heights of the magnetic steels 111. In this case, two magnetic steels 111 with equal coercive forces and unequal remanence may be distinguished based on only heights, and two magnetic steels 111 with unequal coercive forces and equal remanence may be distinguished based on only widths. It should be noted that, to ensure that the slot fill rate of the magnetic steel slot in which the magnetic steels 111 are located is not adversely affected, a height of the magnetic steel slot in the second direction needs to be correspondingly adjusted with a height of the magnetic steel in the second direction.

In an embodiment, the plurality of magnetic steels 111 of the permanent magnet 110 may be arranged in a V shape, a double V shape, a double V and straight-line shape, or the like. Based on different arrangement manners of the magnetic steels 111, distributions of coercive forces and remanence of the permanent magnet 110 are also different, and a shape and a size are also correspondingly adjusted.

The following describes a correspondence between a magnetic performance distribution and a size of the permanent magnet 110 arranged in the V shape in this embodiment of this application.

FIG. 8 is another diagram of a motor 11 according to an embodiment of this application. FIG. 9 is a diagram of a permanent magnet 110 and a diagram of a distribution of a coercive force according to an embodiment of this application. FIG. 10 is a diagram of a permanent magnet 110 and a diagram of a distribution of remanence according to an embodiment of this application. It should be noted that FIG. 8 merely schematically shows an arrangement manner of the plurality of permanent magnets 110. A shape and a size of each permanent magnet 110 in this embodiment of this application are not limited to the structure shown in FIG. 8.

In an embodiment, the plurality of magnetic steels 111 of each permanent magnet 110 include a first magnetic steel 1111 and a second magnetic steel 1112, and the first magnetic steel 1111 and the second magnetic steel 1112 are respectively arranged on two sides of the other of the plurality of magnetic steels 111 in the first direction.

The two permanent magnets 110 are adjacently arranged in a circumferential direction C of the motor 11, an included angle between the two permanent magnets 110 faces an outer circumferential surface of the motor rotor 100, the included angle between the two permanent magnets 110 is less than 180 degrees, and a spacing between two first magnetic steels 1111 of the two permanent magnets 110 in the circumferential direction C of the motor 11 is less than a spacing between two second magnetic steels 1112 of the two permanent magnets 110.

A coercive force of each first magnetic steel 1111 of the two permanent magnets 110 is greater than coercive forces of the other magnetic steels 111 of the two permanent magnets 110, remanence of each first magnetic steel 1111 of the two permanent magnets 110 is greater than remanence of each second magnetic steel 1112 of the two permanent magnets 110, and in each of the two permanent magnets 110, a difference between a width of the one first magnetic steel 1111 and a width of the one second magnetic steel 1112 in the first direction is less than or equal to a difference between the width of the one first magnetic steel 1111 and a width of any magnetic steel 111 other than the one first magnetic steel 1111 and the one second magnetic steel 1112 in the plurality of magnetic steels 111.

In this embodiment of this application, for ease of description, the two permanent magnets 110 are respectively denoted as a permanent magnet 110a and a permanent magnet 110b, a first magnetic steel 1111 and a second magnetic steel 1112 of the permanent magnet 110a are respectively denoted as a first magnetic steel 1111a and a second magnetic steel 1112a, and a first magnetic steel 1111 and a second magnetic steel 1112 of the permanent magnet 110b are respectively denoted as a first magnetic steel 1111b and a second magnetic steel 1112b. The permanent magnet 110a and the permanent magnet 110b are arranged in a V shape, and an included angle between the permanent magnet 110a and the permanent magnet 110b has an opening facing the outer circumferential surface of the motor rotor 100 and is less than 180 degrees. The first magnetic steel 1111 and the second magnetic steel 1112 of each permanent magnet 110 are respectively located at two ends of each permanent magnet 110. The first magnetic steel 1111a and the first magnetic steel 1111b in a radial direction R of the motor 11 are farther away from the outer circumferential surface of the motor rotor 100 than the second magnetic steel 1112a and the second magnetic steel 1112b, and a spacing between the first magnetic steel 1111a and the first magnetic steel 1111b in the circumferential direction C of the motor 11 is less than a spacing between the second magnetic steel 1112a and the second magnetic steel 1112b.

In this embodiment of this application, the permanent magnet 110a and the permanent magnet 110b are arranged in a V shape, and anti-demagnetization requirements of the first magnetic steel 1111a and the first magnetic steel 1111b are greater than requirements of the other magnetic steels 111 in the plurality of magnetic steels 111. Therefore, in this embodiment of this application, a coercive force of the first magnetic steel 1111a and a coercive force of the first magnetic steel 1111b are adjusted to be greater than coercive forces of the other magnetic steels 111, so that an anti-demagnetization capability of an end of the permanent magnet 110a and the permanent magnet 110b can be improved. Remanence of the first magnetic steel 1111a is greater than remanence of the second magnetic steel 1112a, and remanence of the first magnetic steel 1111b is greater than remanence of the second magnetic steel 1112b. Distributions of remanence of the permanent magnet 110a and remanence of the permanent magnet 110b are adjusted, so that sine of a magnetic field of a rotor can be optimized.

The permanent magnet 110a is used as an example. Based on particular positions of the first magnetic steel 1111a and the second magnetic steel 1112a, when the first magnetic steel 1111a and the second magnetic steel 1112a are classified into different orders, accurate positioning of the first magnetic steel 1111a and the second magnetic steel 1112a can be directly implemented based on the orders. When the first magnetic steel 1111a and the second magnetic steel 1112a are classified into a same order, a difference between widths of the first magnetic steel 1111a and the second magnetic steel 1112a and widths of the other magnetic steels 111 in the plurality of magnetic steels 111 may be learned of through comparison, and the first magnetic steel 1111a and the second magnetic steel 1112a are distinguished based on a magnitude relationship between remanence. The first magnetic steel 1111b and the second magnetic steel 1112b of the permanent magnet 110b are similar.

Still as shown in FIG. 8 and FIG. 10, in an embodiment, in at least one of the permanent magnet 110a and the permanent magnet 110b, a coercive force of the second magnetic steel 1112 is greater than a coercive force of a magnetic steel 111 other than the first magnetic steel 1111 and the second magnetic steel 1112 in the plurality of magnetic steels 111. A difference between a width of the first magnetic steel 1111 and a width of the second magnetic steel 1112 in the first direction A is less than a difference between the width of the first magnetic steel 1111 and a width of any magnetic steel 111 other than the first magnetic steel 1111 and the second magnetic steel 1112 in the plurality of magnetic steels 111.

In this embodiment of this application, the permanent magnet 110a is used as an example. The second magnetic steel 1112a also has a high anti-demagnetization requirement, and a coercive force of the second magnetic steel 1112a is between a coercive force of the first magnetic steel 1111a and coercive forces of the other magnetic steels 111. This helps reduce a demagnetization risk at two ends of the permanent magnet 110a. The first magnetic steel 1111a and the second magnetic steel 1112a are classified into a same order, and the width of the second magnetic steel 1112a is closer to the width of the first magnetic steel 1111a than the width of the magnetic steel 111 other than the first magnetic steel 1111a and the second magnetic steel 1112a in the plurality of magnetic steels 111. Because the width of the first magnetic steel 1111a is small, in this embodiment of this application, this helps reduce a quantity of heavy rare earth elements of the permanent magnet 110, and control costs of the motor rotor.

Still as shown in FIG. 8 and FIG. 10, in an embodiment, in at least one of the permanent magnet 110a or the permanent magnet 110b, remanence of the plurality of magnetic steels 111 decreases in sequence from the first magnetic steel 1111 to the second magnetic steel 1112 in the first direction, and widths of magnetic steels 111 other than the first magnetic steel 1111 and the second magnetic steel 1112 in the plurality of magnetic steels 111 in the first direction A are unequal.

In this embodiment of this application, the permanent magnet 110a is used as an example, and the remanence decreases in sequence from the first magnetic steel 1111a to the second magnetic steel 1112a. This helps improve a sine degree of an air gap magnetic density waveform. On the basis that positions of the first magnetic steel 1111a and the second magnetic steel 1112a are determined, the plurality of magnetic steels 111 may be mounted based on different widths of the other magnetic steels 111, to implement a distribution in which the remanence decreases in sequence.

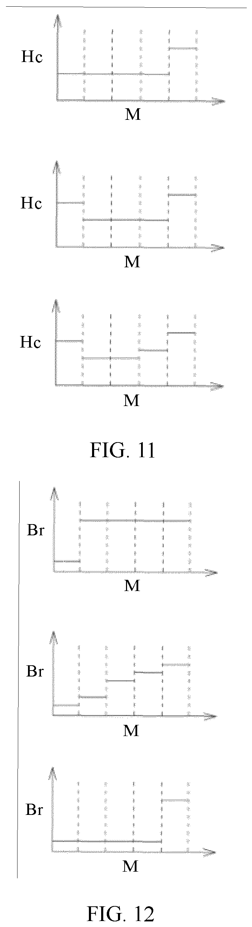

Refer to FIG. 9 to FIG. 12 together. FIG. 11 and FIG. 12 each are a diagram of a plurality of distributions of a coercive force and remanence of one of two permanent magnets 110 distributed in a V shape according to an embodiment of this application. In this embodiment of this application, the permanent magnet 110a is used as an example. A left-to-right direction in FIG. 11 and FIG. 12 is parallel to a direction from the second magnetic steel 1112a to the first magnetic steel 1111a. In the plurality of magnetic steels 111 of the permanent magnet 110a, the coercive force of the first magnetic steel 1111a is the largest, and the coercive force of the second magnetic steel 1112a is greater than or equal to a coercive force of the magnetic steel 111 other than the first magnetic steel 1111a and the second magnetic steel 1112a in the plurality of magnetic steels 111. Based on the foregoing distribution feature, a coercive force of a magnetic steel 111 arranged between the first magnetic steel 1111a and the second magnetic steel 1112a may be adjusted based on a requirement, and is not limited to the distribution shown in FIG. 10.

In this embodiment of this application, in the plurality of magnetic steels 111 of the permanent magnet 110a, the remanence of the first magnetic steel 1111a is the largest, and the remanence of the second magnetic steel 1112a is less than or equal to remanence of the magnetic steel 111 other than the first magnetic steel 1111a and the second magnetic steel 1112a in the plurality of magnetic steels 111. Based on the foregoing distribution feature, remanence of a magnetic steel 111 arranged between the first magnetic steel 1111a and the second magnetic steel 1112a may be adjusted based on a requirement, and is not limited to the distribution shown in FIG. 11.

It should be noted that FIG. 11 and FIG. 12 merely schematically show relative magnitudes of coercive forces and remanence of magnetic steels at different positions in the permanent magnet 110a, and it does not represent actual differences in magnetic performance and sizes of the magnetic steels.

In an embodiment, coercive forces and remanence of the permanent magnet 110a and the permanent magnet 110b are axisymmetrically distributed with respect to a radial direction of the motor rotor 100.

In this embodiment of this application, the coercive forces of the permanent magnet 110a and the permanent magnet 110b are symmetrically distributed. Because the coercive forces of the first magnetic steel 1111a and the first magnetic steel 1111b are large, to help improve an anti-demagnetization capability of the permanent magnet 110a and the permanent magnet 110b in an easily demagnetized region. The remanence of the permanent magnet 110a and the permanent magnet 110b is symmetrically distributed. Because the remanence of the permanent magnet 110a and the permanent magnet 110b decreases in sequence, overall remanence of the permanent magnet 110a and the permanent magnet 110b presents a sine wave shape, and a rotor magnetic field closer to a sine distribution can be generated.

In this embodiment of this application, magnetic performance of the permanent magnet 110a and the permanent magnet 110b is symmetrically distributed. With reference to a correspondence between a coercive force, remanence, and a width in this embodiment of this application, it can be learned that sizes of the permanent magnet 110a and the permanent magnet 110b are also symmetrically distributed, so that magnetic steels 111 of different sizes in the permanent magnet 110a and the permanent magnet 110b are evenly distributed, to help reduce processing costs of the permanent magnet 110 and reduce torque fluctuation of the motor 11.

In an embodiment, the permanent magnet 110a and the permanent magnet 110b form one magnetic pole unit, the motor rotor 100 includes a plurality of magnetic pole units, and the plurality of magnetic pole units are arranged at intervals in the circumferential direction of the motor 11.

The following describes a correspondence between a magnetic performance distribution and a size of the permanent magnet 110 arranged in the double V shape in this embodiment of this application.

Refer to FIG. 4 and FIG. 12 together. FIG. 12 is another diagram of a permanent magnet 110 according to an embodiment of this application. In an embodiment, an average spacing between the outer circumferential surface of the motor rotor 100 and other two permanent magnets 110 in the radial direction R of the motor 11 is greater than an average spacing between the outer circumferential surface of the motor rotor 100 and both of the permanent magnet 110a and the permanent magnet 110b, widths of the other two permanent magnets 110 in the first direction are greater than the width of the permanent magnet 110a and the width of the permanent magnet 110b, an included angle between the other two permanent magnets 110 faces the outer circumferential surface of the motor rotor 100, and the included angle between the other two permanent magnets 110 is less than the included angle between the permanent magnet 110a and the permanent magnet 110b.

A coercive force of each first magnetic steel 1111 of the other two permanent magnets 110 is less than or equal to the coercive force of each first magnetic steel 1111 of the permanent magnet 110a and the permanent magnet 110b, the coercive force of each first magnetic steel 1111 of the other two permanent magnets 110 is greater than coercive forces of the other magnetic steels 111 of the other two permanent magnets 110, and a width of each first magnetic steel 1111 of the other two permanent magnets 110 in the first direction is less than a width of each second magnetic steel 1112 of the other two permanent magnets 110.

In this embodiment of this application, for ease of description, other two permanent magnets 110 are respectively denoted as a permanent magnet 110c and a permanent magnet 110d, a first magnetic steel 1111 and a second magnetic steel 1112 of the permanent magnet 110c are respectively denoted as a first magnetic steel 1111c and a second magnetic steel 1112c, and a first magnetic steel 1111 and a second magnetic steel 1112 of the permanent magnet 110d are respectively denoted as a first magnetic steel 1111d and a second magnetic steel 1112d. The permanent magnet 110c and the permanent magnet 110d are also arranged in a V shape, and an included angle between the permanent magnet 110c and the permanent magnet 110d has an opening facing the outer circumferential surface of the motor rotor 100 and is less than an included angle between the permanent magnet 110a and the permanent magnet 110b. The permanent magnet 110a, the permanent magnet 110b, the permanent magnet 110c, and the permanent magnet 110d are jointly arranged in a double V shape.

In this embodiment of this application, similar to the first magnetic steel 1111a, anti-demagnetization requirements of the first magnetic steel 1111c and the first magnetic steel 1111d are greater than requirements of the other magnetic steels 111 in the permanent magnet 110c and the permanent magnet 110d. In this embodiment of this application, coercive forces of the first magnetic steel 1111c and the first magnetic steel 1111d are adjusted to be greater than coercive forces of the other magnetic steels 111 of the permanent magnet 110c and the permanent magnet 110d. This helps reduce a demagnetization risk of the first magnetic steel 1111c and the first magnetic steel 1111d.

The permanent magnet 110c is used as an example. Based on particular positions of the first magnetic steel 1111c and the second magnetic steel 1112c, when the first magnetic steel 1111c and the second magnetic steel 1112c are classified into different orders, accurate positioning of the first magnetic steel 1111c and the second magnetic steel 1112c can be directly implemented based on the orders. When the first magnetic steel 1111c and the second magnetic steel 1112c are classified into a same order, a difference between widths of the first magnetic steel 1111c and the second magnetic steel 1112c and widths of the other magnetic steels 111 in the plurality of magnetic steels 111 may be learned of through comparison, and the first magnetic steel 1111a and the second magnetic steel 1112a are distinguished based on a magnitude relationship between remanence. The first magnetic steel 1111d and the second magnetic steel 1112d of the permanent magnet 110d are similar.

In this embodiment of this application, compared with the permanent magnet 110a and the permanent magnet 110b, the permanent magnet 110c and the permanent magnet 110d are farther away from an air gap between the motor stator 200 and the motor rotor 100 in the radial direction R of the motor 11, and the permanent magnet 110c and the permanent magnet 110d are unlikely to be affected by an air gap magnetic field. Therefore, in this embodiment of this application, the coercive forces of the first magnetic steel 1111c and the first magnetic steel 1111d are adjusted to be less than or equal to the coercive forces of the first magnetic steel 1111a and the first magnetic steel 1111b, so that quantities of heavy rare earth elements in the first magnetic steel 1111c and the first magnetic steel 1111d can be reduced, and costs of the motor 11 can be reduced.

Still as shown in FIG. 12, in an embodiment, in the first direction, a ratio of a width of a first magnetic steel 1111 of each of the permanent magnet 110c and the permanent magnet 110d to a sum of widths of the plurality of magnetic steels 111 is less than a ratio of the width of a first magnetic steel 1111 of each of the permanent magnet 110a and the permanent magnet 110b to the sum of the widths of the plurality of magnetic steels 111.

In this embodiment of this application, the permanent magnet 110a and the permanent magnet 110c are used as an example. Because a demagnetization risk of the first magnetic steel 1111c is less than the demagnetization risk of the first magnetic steel 1111a, and a width ratio of the first magnetic steel 1111c to the permanent magnet 110c is less than a width ratio of the first magnetic steel 1111a to the permanent magnet 110a, this can ensure that the first magnetic steel 1111a has a strong anti-demagnetization capability, and can also control heavy rare earth element content of each permanent magnet 110 in the motor rotor 100, to balance performance and costs of the motor.

In an embodiment, coercive forces and remanence of the permanent magnet 110c and the permanent magnet 110d are axisymmetrically distributed with respect to a radial direction of the motor rotor 100.

In this embodiment of this application, magnetic performance of the permanent magnet 110c and the permanent magnet 110d is symmetrically distributed. With reference to a correspondence between a coercive force, remanence, and a width in this embodiment of this application, it can be learned that sizes of the permanent magnet 110c and the permanent magnet 110d are also symmetrically distributed, so that magnetic steels 111 of different sizes in the permanent magnet 110c and the permanent magnet 110d are evenly distributed, to help reduce processing costs of the permanent magnet 110 and reduce torque fluctuation of the motor 11.

It should be noted that various distributions of the coercive force and the remanence in the permanent magnet 110a and the permanent magnet 110b are also applicable to the permanent magnet 110c and the permanent magnet 110d.

In an embodiment, the permanent magnet 110a, the permanent magnet 110b, the permanent magnet 110c, and the permanent magnet 110d form one magnetic pole unit, the motor rotor 100 includes a plurality of magnetic pole units, and the plurality of magnetic pole units are arranged at intervals in the circumferential direction C of the motor 11.

The following describes a correspondence between a magnetic performance distribution and a size of the permanent magnet 110 arranged in the double V and straight-line shape in this embodiment of this application.

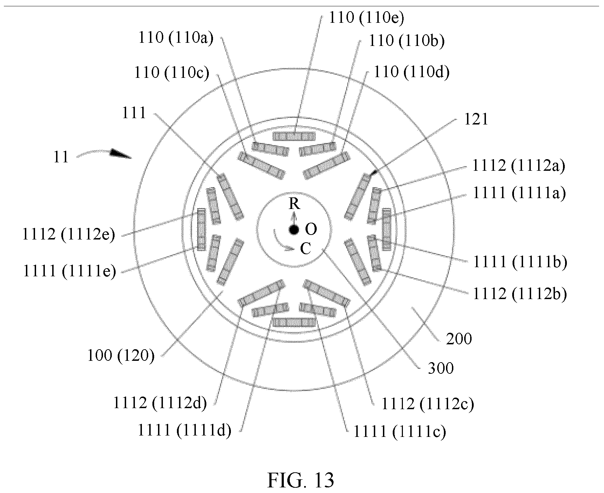

FIG. 13 is still another diagram of a motor 11 according to an embodiment of this application. In an embodiment, still another permanent magnet 110 in the circumferential direction C of the motor 11 is arranged between the permanent magnet 110a and the permanent magnet 110b, and an average spacing between the still another permanent magnet 110 and the motor rotor 100 in the radial direction R of the motor 11 is less than an average spacing between the outer circumferential surface of the motor rotor 100 and both of the permanent magnet 110a and the permanent magnet 110b.

Both remanence of the first magnetic steel 1111 and remanence of the second magnetic steel 1112 of the still another permanent magnet 110 are less than remanence of a magnetic steel 111 other than the first magnetic steel 1111 and the second magnetic steel 1112 in the plurality of magnetic steels 111, and a coercive force of the first magnetic steel 1111 of the still another permanent magnet 110 is greater than a coercive force of a magnetic steel 111 other than the first magnetic steel 1111 and the second magnetic steel 1112 in the plurality of magnetic steels 111.

A width of the first magnetic steel 1111 of the still another permanent magnet 110 in the first direction A is less than a width of the magnetic steel 111 other than the first magnetic steel 1111 and the second magnetic steel 1112 in the plurality of magnetic steels 111.

In this embodiment of this application, for ease of description, the still another permanent magnet 110 is denoted as a permanent magnet 110e, and the first magnetic steel 1111 and the second magnetic steel 1112 of the permanent magnet 110e are respectively denoted as a first magnetic steel 1111e and a second magnetic steel 1112e. The permanent magnet 110a, the permanent magnet 110b, the permanent magnet 110c, the permanent magnet 110d, and the permanent magnet 110e are jointly arranged in a double V and straight-line shape.

In this embodiment of this application, in the permanent magnet 110e in a straight-line shape, the first magnetic steel 1111e is an easily demagnetized part. Therefore, a coercive force of the first magnetic steel 1111e is greater than the coercive forces of the other magnetic steels 111, to help improve anti-demagnetization performance of the permanent magnet 110. Different from a case in which the remanence of the plurality of permanent magnets 110 arranged in the V shape form a sine distribution through cooperation, an ideal distribution of the remanence of the magnetic steels 111 arranged in the straight-line shape is that the remanence forms a sine distribution, a magnetic steel 111 with largest remanence in the permanent magnet 110e is located between the first magnetic steel 1111 and the second magnetic steel 1112. A width of the magnetic steel 111 with the largest remanence in the permanent magnet 110e is greater than the width of the first magnetic steel 1111, so that both quick identification of magnetic steels 111 with different performance and control of the heavy rare earth element content are considered.

Still as shown in FIG. 13, in an embodiment, a ratio of the width of the first magnetic steel 1111 of the still another permanent magnet 110 in the first direction A to the sum of the widths of the plurality of magnetic steels 111 is greater than a ratio of the width of a first magnetic steel 1111 of each permanent magnet 110 in the permanent magnet 110c and the permanent magnet 110d to the sum of the widths of the plurality of magnetic steels 111.

In this embodiment of this application, the permanent magnet 110e and the permanent magnet 110c are used as an example. Because a demagnetization risk of the first magnetic steel 1111e is greater than the demagnetization risk of the first magnetic steel 1111c, and a width ratio of the first magnetic steel 1111e to the permanent magnet 110e is greater than a width ratio of the first magnetic steel 1111c to the permanent magnet 110c, this can ensure that the first magnetic steel 1111e has a strong anti-demagnetization capability, and can also control heavy rare earth element content of each permanent magnet 110 in the motor rotor 100, to balance performance and costs of the motor.

In an embodiment, coercive forces of the first magnetic steel 1111e and the second magnetic steel 1112e of the permanent magnet 110e are greater than a coercive force of a magnetic steel 111 other than the first magnetic steel 1111e and the second magnetic steel 1112 in the plurality of magnetic steels 111. Widths of the first magnetic steel 1111e and the second magnetic steel 1112e of the permanent magnet 110e in the first direction A are less than a width of the magnetic steel 111 other than the first magnetic steel 1111e and the second magnetic steel 1112e in the plurality of magnetic steels 111.

The foregoing describes in detail the motor, the powertrain, and the vehicle provided in embodiments of this application. The principles and embodiments in this application are described in this specification by using specific examples. The descriptions about embodiments are merely provided to help understand the method in this application and core ideas of the method. In addition, a person of ordinary skill in the art may make modifications to the specific embodiments and the application scope based on the idea of this application. In conclusion, the content of this specification shall not be construed as a limitation on this application.

## Claims

1. A motor, wherein a motor rotor of the motor comprises a plurality of permanent magnets, the plurality of permanent magnets are arranged at intervals, each permanent magnet comprises a plurality of magnetic steels, and the plurality of magnetic steels are adjacently arranged in a first direction; and
a coercive force of one of the plurality of magnetic steels is unequal to a coercive force of another magnetic steel, remanence of the one magnetic steel is unequal to remanence of still another of the plurality of magnetic steels, a width of the one magnetic steel in the first direction is unequal to both a width of the another magnetic steel and a width of the still another magnetic steel, and the first direction is perpendicular to an axial direction of the motor.

2. The motor according to claim 1, wherein heights of the plurality of magnetic steels in a second direction are all equal, and the second direction is perpendicular to the axial direction of the motor; and
both coercive forces and remanence of two of the plurality of magnetic steels are equal, and widths of the two magnetic steels in the first direction are equal.

3. The motor according to claim 1, wherein the remanence of the one magnetic steel is equal to remanence of the another magnetic steel, the coercive force of the one magnetic steel is equal to a coercive force of the still another magnetic steel, and the width of the another magnetic steel in the first direction is unequal to the width of the still another magnetic steel.

4. The motor according to claim 1, wherein the coercive force of the one of the plurality of magnetic steels is the smallest, the width of the one magnetic steel in the first direction is greater than the width of the another magnetic steel, and a heavy rare earth element content of the one magnetic steel is less than a heavy rare earth element content of the another magnetic steel; and
a difference between the remanence of the still another magnetic steel and the remanence of the one magnetic steel is less than a difference between remanence of the another magnetic steel and the remanence of the one magnetic steel, and a difference between the width of the still another magnetic steel and the width of the one magnetic steel in the first direction is less than a difference between the width of the another magnetic steel and the width of the one magnetic steel.

5. The motor according to any one of claims 1 to 4, wherein the plurality of magnetic steels of each permanent magnet comprise one first magnetic steel and one second magnetic steel, and the one first magnetic steel and the one second magnetic steel are respectively arranged on two sides of the other of the plurality of magnetic steels in the first direction;
two permanent magnets are adjacently arranged in a circumferential direction of the motor, an included angle between the two permanent magnets faces an outer circumferential surface of the motor rotor, the included angle between the two permanent magnets is less than 180 degrees, and a spacing between two first magnetic steels of the two permanent magnets in the circumferential direction of the motor is less than a spacing between two second magnetic steels of the two permanent magnets; and
a coercive force of each first magnetic steel of the two permanent magnets is greater than coercive forces of the other magnetic steels of the two permanent magnets, remanence of each first magnetic steel of the two permanent magnets is greater than remanence of each second magnetic steel of the two permanent magnets, and in each of the two permanent magnets, a difference between a width of the one first magnetic steel and a width of the one second magnetic steel in the first direction is less than or equal to a difference between the width of the one first magnetic steel and a width of any magnetic steel other than the one first magnetic steel and the one second magnetic steel in the plurality of magnetic steels.

6. The motor according to claim 5, wherein in at least one of the two permanent magnets, a coercive force of the one second magnetic steel is greater than a coercive force of a magnetic steel other than the one first magnetic steel and the one second magnetic steel in the plurality of magnetic steels, and a difference between a width of the one first magnetic steel and a width of the one second magnetic steel in the first direction is less than a difference between the width of the one first magnetic steel and a width of any magnetic steel other than the one first magnetic steel and the one second magnetic steel in the plurality of magnetic steels.

7. The motor according to claim 6, wherein in the at least one permanent magnet, remanence of the plurality of magnetic steels decreases in sequence from the one first magnetic steel to the one second magnetic steel in the first direction, and widths of magnetic steels other than the one first magnetic steel and the one second magnetic steel in the plurality of magnetic steels in the first direction are unequal.

8. The motor according to claim 6 or 7, wherein coercive forces and remanence of the two permanent magnets are axisymmetrically distributed with respect to a radial direction of the motor rotor.

9. The motor according to claim 5, wherein an average spacing between the outer circumferential surface of the motor rotor and other two permanent magnets in the radial direction of the motor is greater than an average spacing between the outer circumferential surface of the motor rotor and the two permanent magnets, widths of the other two permanent magnets are greater than widths of the two permanent magnets in the first direction, an included angle between the other two permanent magnets faces the outer circumferential surface of the motor rotor, and the included angle between the other two permanent magnets is less than the included angle between the two permanent magnets; and
a coercive force of each first magnetic steel of the other two permanent magnets is less than or equal to the coercive force of each first magnetic steel of the two permanent magnets, the coercive force of each first magnetic steel of the other two permanent magnets is greater than coercive forces of the other magnetic steels of the other two permanent magnets, and a width of each first magnetic steel of the other two permanent magnets in the first direction is less than a width of each second magnetic steel of the other two permanent magnets.

10. The motor according to claim 9, wherein in the first direction, a ratio of a width of the one first magnetic steel of each of the other two permanent magnets to a sum of widths of the plurality of magnetic steels is less than a ratio of the width of the one first magnetic steel of each of the two permanent magnets to the sum of the widths of the plurality of magnetic steels.

11. The motor according to claim 9, wherein coercive forces and remanence of the other two permanent magnets are axisymmetrically distributed with respect to a radial direction of the motor rotor.

12. The motor according to claim 10 or 11, wherein still another permanent magnet in the circumferential direction of the motor is arranged between the two permanent magnets, and an average spacing between the still another permanent magnet and the motor rotor in the radial direction of the motor is less than the average spacing between the outer circumferential surface of the motor rotor and the two permanent magnets;
both remanence of the one first magnetic steel and remanence of the one second magnetic steel of the still another permanent magnet are less than remanence of a magnetic steel other than the one first magnetic steel and the one second magnetic steel in the plurality of magnetic steels, and a coercive force of the one first magnetic steel of the still another permanent magnet is greater than a coercive force of the magnetic steel other than the one first magnetic steel and the one second magnetic steel in the plurality of magnetic steels; and
a width of the one first magnetic steel of the still another permanent magnet in the first direction is less than a width of the magnetic steel other than the one first magnetic steel and the one second magnetic steel in the plurality of magnetic steels.

13. The motor according to claim 12, wherein in the first direction, a ratio of the width of the one first magnetic steel of the still another permanent magnet to the sum of the widths of the plurality of magnetic steels is greater than the ratio of the width of the one first magnetic steel of each of the other two permanent magnets to the sum of widths of the plurality of magnetic steels.

14. A powertrain, wherein the powertrain comprises a motor controller, a reducer, and the motor according to any one of claims 1 to 13, the motor controller is configured to provide electric energy for the motor, and the motor is configured to be in transmission connection to the reducer.

15. A vehicle, wherein the vehicle comprises a frame, a battery pack, and the powertrain according to claim **14,** the frame is configured to fasten the battery pack and the powertrain, the battery pack is configured to supply power to the motor by using the motor controller, and the powertrain is configured to drive wheels of the vehicle by using the motor.
